(19) **Europäisches Patentamt European Patent Office Office européen des brevets**

(11) **EP 4 654 638 A1**

(12) **EUROPEAN PATENT APPLICATION**
published in accordance with Art. 153(4) EPC

(43) Date of publication:
**26.11.2025 Bulletin 2025/48**

(21) Application number: **24744189.2**

(22) Date of filing: **15.01.2024**

(51) International Patent Classification (IPC):
***H04W 8/24*** (2009.01)

(52) Cooperative Patent Classification (CPC):
**G06N 20/00; H04W 8/24**

(86) International application number:
**PCT/CN2024/072225**

(87) International publication number:
**WO 2024/153013 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.01.2023 CN 202310057714
09.02.2023 CN 202310091135**

(71) Applicant: **Vivo Mobile Communication Co., Ltd.
Dongguan, Guangdong 523863 (CN)**

(72) Inventors:
- **CHENG, Sihan
Dongguan, Guangdong 523863 (CN)**
- **CHONG, Weiwei
Dongguan, Guangdong 523863 (CN)**
- **WU, Xiaobo
Dongguan, Guangdong 523863 (CN)**

(74) Representative: **Lavoix
Bayerstraße 83
80335 München (DE)**

(54) **INFORMATION TRANSMISSION METHOD AND APPARATUS AND COMMUNICATION DEVICE**

(57) This application discloses an information transmission method and apparatus, and a communication device, and pertains to the field of communication technologies. The information transmission method of embodiments of this application includes: sending, by a first communication device, first information to a second communication device; where the first information includes information for indicating data used to obtain an accuracy of a first model.

A first communication device sends first information to a second communication device, where the first information includes information for indicating data used to obtain an accuracy of a first model — 201

FIG. 2

**Description**

**CROSS-REFERENCE TO RELATED APPLICATIONS**

This application claims priority to Chinese Patent Application No. 202310057714.5 filed in China on January 16, 2023 and Chinese Patent Application No. 202310091135.2 filed in China on February 9, 2023, which are incorporated herein by reference in their entireties.

**TECHNICAL FIELD**

This application pertains to the field of communication technologies, and specifically relates to an information transmission method and apparatus, and a communication device.

## BACKGROUND

With the development of science and technology, people have begun to research the application of artificial intelligence (Artificial Intelligence, AI) models in communication systems. For example, communication data can be transmitted between network-side devices and terminals through AI models. During practical use, an AI model refers to a file containing elements such as a network structure and parameter information. A trained AI model can be directly used by other devices without repeated construction or learning. At present, during sending of an AI model, only relevant information of the model, such as an address of a model file and optional valid time, is sent, and a model receiving terminal cannot get accuracy information of the model.

**SUMMARY**

Embodiments of this application provides an information transmission method and apparatus, and a communication device, which can solve the problem that a model receiving terminal cannot get accuracy information of a model in the related art.

According to a first aspect, an information transmission method is provided, including:

sending, by a first communication device, first information to a second communication device; where
the first information includes information for indicating data used to obtain an accuracy of a first model.

According to a second aspect, an information transmission method is provided, including:

receiving, by a second communication device, first information sent by a first communication device; where
the first information includes information for indicating data used to obtain an accuracy of a first model.

According to a third aspect, an information transmission apparatus is provided, including:

a sending module, configured to send first information to a second communication device; where
the first information includes information for indicating data used to obtain an accuracy of a first model.

According to a fourth aspect, an information transmission apparatus is provided, including:

a receiving module, configured to receive first information sent by a first communication device; where
the first information includes information for indicating data used to obtain an accuracy of a first model.

According to a fifth aspect, a communication device is provided. The communication device includes a processor and a memory. The memory stores a program or instructions capable of running on the processor, and when the program or instructions are executed by the processor, the steps of the method according to the first aspect are implemented, or the steps of the method according to the second aspect are implemented.

According to a sixth aspect, a communication device is provided, including a processor and a communication interface, where the communication interface is used to send first information to a second communication device or receive first information sent by a first communication device, and the first information includes information for indicating data used to obtain an accuracy of a first model.

According to a seventh aspect, a communication system is provided, including a first communication device and a second communication device. The first communication device may be configured to implement the steps of the information transmission method according to the first aspect, and the second communication device may be configured to implement the steps of the information transmission method according to the second aspect.

According to an eighth aspect, a readable storage medium is provided. The readable storage medium stores a program or instructions, and when the program or instructions are executed by a processor, the steps of the information transmission method according to the first aspect are implemented, or the steps of the information transmission method according to the second aspect are implemented.

According to a ninth aspect, a chip is provided. The chip includes a processor and a communication interface, the communication interface is coupled to the processor, and the processor is configured to run a program or instructions to implement the information transmission method according to the first aspect or the information transmission method according to the second aspect.

According to a tenth aspect, a computer program/program product is provided. The computer program/program product is stored in a storage medium, and the program/program product is executed by at least one processor to implement the steps of the information transmission method according to the first aspect or the second aspect.

In the embodiments of this application, the first communication device sends the first information to the second communication device, and the first information includes the information for indicating the data used to obtain the accuracy of the first model, thereby enabling the second communication device to obtain, based on the information of the data, the accuracy of the first model. Thus, the second communication device can better use the first model, improving the credibility and use experience of the first model.

**BRIEF DESCRIPTION OF DRAWINGS**

FIG. 1 is a block diagram of a wireless communication system to which embodiments of this application are applicable;
FIG. 2 is a flowchart of an information transmission method according to an embodiment of this application;
FIG. 3 is a flowchart of another information transmission method according to an embodiment of this application;
FIG. 4 is a structural diagram of an information transmission apparatus according to an embodiment of this application;
FIG. 5 is a structural diagram of another information transmission apparatus according to an embodiment of this application;
FIG. 6 is one of structural diagrams of a communication device according to an embodiment of this application;
FIG. 7 is a structural diagram of a terminal according to an embodiment of this application; and
FIG. 8 is a structural diagram of a network-side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that the terms used in this way are interchangeable in appropriate circumstances so that the embodiments of this application can be implemented in other orders than the order illustrated or described herein. In addition, "first" and "second" are usually used to distinguish objects of a same type, and do not restrict the number of the objects. For example, there may be one or a plurality of first objects. In addition, "and/or" in the specification and claims represents at least one of connected objects, and the character "/" generally indicates that the contextually associated objects have an "or" relationship.

It is worth noting that the technology described in the embodiments of this application is not limited to long term evolution (Long Term Evolution, LTE)/LTE-Advanced (LTE-Advanced, LTE-A) systems, and may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as in other systems and radio technologies. In the following descriptions, a new radio (New Radio, NR) system is described for an illustration purpose, NR terms are used in most of the following descriptions, and these technologies may also be applied to other applications than the NR system application, for example, the 6th generation (6th Generation, 6G) communication system.

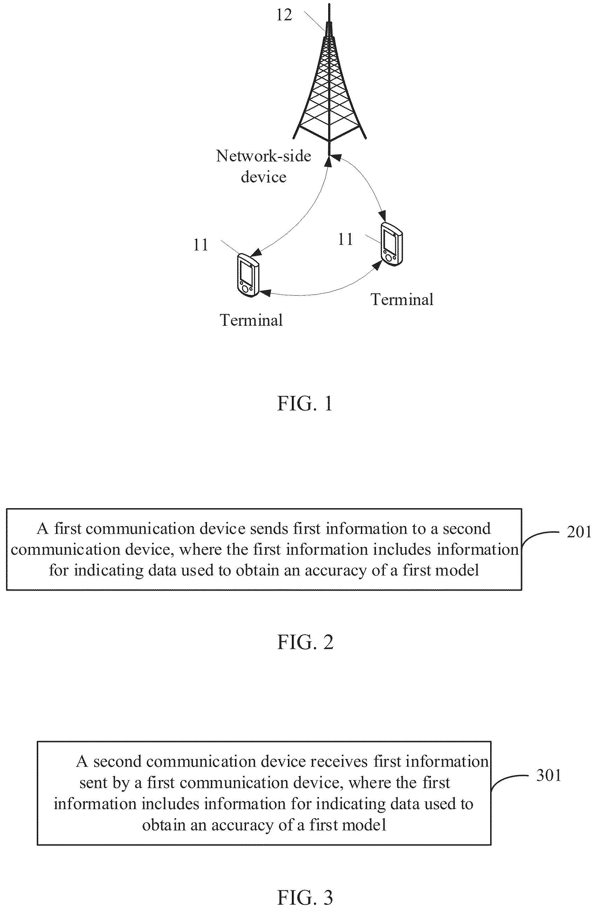

FIG. 1 is a block diagram of a wireless communication system to which the embodiments of this application are applicable. The wireless communication system includes a terminal 11 and a network-side device 12. The terminal 11 may be a terminalside device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a Node B, an evolved Node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmission and reception point (Transmission and Reception Point, TRP), or some other suitable terms in the art, as long as the same technical effects are achieved. The base station is not limited to specific technical term. It should be noted that in the embodiments of this application, only the base station in the NR system is used as an example for introduction, and the specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that in the embodiments of this application, only the core network device in the NR system is used as an example for introduction, and the specific type of the core network device is not limited.

The following describes in detail a transmission method provided in the embodiments of this application by using some embodiments and application scenarios thereof with reference to the accompanying drawings.

Referring to FIG. 2, FIG. 2 is a flowchart of a transmission method according to an embodiment of this application. As shown in FIG. 2, the method includes the following steps.

Step 201: A first communication device sends first information to a second communication device, where the first information includes information for indicating data used to obtain an accuracy of a first model.

It should be noted that in this embodiment of this application, the first communication device may be a network-side device, such as a network element, a terminal, a base station, a gateway, or the like; and the second communication device may also be a network-side device, a terminal, a base station, a gateway, or the like. For example, the first communication device is a network-side device, and the second communication device is a terminal. Optionally, the first communication device may be a model sending terminal having model sending capability and model training capability, for example, a model training logical function (Model Training Logical Function, MTLF); and the second communication device may be a model receiving terminal having model receiving capability and model inference capability, for example, an analytics logical function (Analytics Logical Function, AnLF).

In this embodiment of this application, the first communication device sends the first information to the second communication device, and the first information includes the information for indicating the data used to obtain the accuracy of the first model, thereby enabling the second communication device to obtain, based on the first information, information about the data used to calculate the accuracy of the first model. Thus, during a process of using the first model, the second communication device can obtain, based on the accuracy of the first model, an accuracy of an inference result outputted by the first model, such that the second communication device can better use the first model, improving the credibility and use experience of the first model. Optionally, the second communication device can obtain the accuracy of the first model based on the data information.

Optionally, the accuracy of the first model may be obtained in a manner that the first communication device obtains the accuracy of the first model through calculation, or the accuracy of the first model is obtained by other communication devices, or the like.

It should be noted that the first model may be a model already present in the second communication device. For example, the second communication device has obtained the first model from the first communication device or another third party. Alternatively, the first model may be a model newly requested by the second communication device from the first communication device. Optionally, in a case that the first communication device sends the first information to the second communication device, the first model may also be sent to the second communication device, thereby enabling the second communication device to obtain both the first model and the information about the data used to obtain the accuracy of the first model.

Optionally, the accuracy may refer to a model accuracy (Model Accuracy), an analytics accuracy, a training accuracy (Training Accuracy), an accuracy provided by a third device (such as MTLF) (Accuracy provide by MTLF), performance (performance) information of the first model, or the like. The accuracy may also refer to an accuracy during model training or an accuracy during model use.

Optionally, the information for indicating the data used to obtain the accuracy of the first model includes at least one of the following:

(1) a first number, used to indicate the amount of the data used to obtain the accuracy of the first model;
(2) a first collection time, used to indicate a time for obtaining the data used to obtain the accuracy of the first model; and for example, the collection time may be a time node or a time range, such as using data from 12:00 to 18:00 on a specific day to calculate the accuracy of the first model;
(3) first distribution information, used to indicate a distribution of the data used to obtain the accuracy of the first model, such as a method for counting mean values, median values, or variance values of samples;
(4) first source information, used to indicate a source of the data used to obtain the accuracy of the first model, for example, source location information, source network element information, or source object information (such as one or more user equipments (UEs));
(5) a first representative ratio (representative ratio), where the first representative ratio is used to represent a percentage of objects applied in a training process of the first model; for example, when object information corresponding to the first model is a group of UEs or any UE, the first representative ratio indicates a percentage of related UEs used for training the first model; for instance, if the object information includes 100 UEs and data of 70 UEs is used in the training process of the first model, the first representative ratio is 70%.
(6) a third number, where the third number is used to indicate the number of inference executions; and
(7) a first collection area, where the first collection area is used to indicate an area for obtaining the data used to obtain the accuracy of the first model.

It should be noted that in some scenarios, the data used to obtain the accuracy of the first model may also be referred to as sample data, training data, inference data, or the like. In this embodiment of this application, the data may be data used in an inference process of the first model (that is, a process of obtaining an output result of the first model), or data used to train the first model. The data used to train the first model includes the data used to train the first model, and/or the data used to calculate the accuracy of the first model during the training process of the first model.

Optionally, a method for counting the amount of data may include directly counting all data entries to obtain a total number of the data entries. It can be understood that the amount of data is the number of data entries. In another method, the number of data groups is counted, where data corresponding to one operation of the model is considered as one group of data, and this group of data includes label data corresponding to predicted data, ground truth, or the like. It can be understood that the amount of data is the number of data groups. Alternatively, the predicted data and/or a time corresponding to the predicted data is considered as a key point of one group of data, to generate input data corresponding to the predicted data at that time, the label data corresponding to the predicted data at that time, and the like, where the amount of data is a total number of the data groups. It should be noted that one group of data may include at least one of input data, output data, a predicted value (predicted data), label data, ground truth (ground truth), and the like.

It should be noted that in this application, the label data and the ground truth have similar meanings and are interchangeable in some cases, which are not described again hereinafter.

It should be noted that in this application, the output data and the predicted value have similar meanings and are interchangeable in some cases, which are not described again hereinafter.

It should be noted that in this application, the inference and analytics (analytics) have the same meaning and are interchangeable. For example, inference execution and analytics execution have the same meaning, the number of inference executions and the number of analytics executions have the same meaning, inference output and analytics output have the same meaning, or the number of inference outputs and the number of analytics outputs have the same meaning, which are not described again hereinafter.

It should be noted that since each piece of data can be used for one inference execution by the model, the amount of the data used to obtain the accuracy information of the first model can also be understood as: the number of inferences (number of inference) executed to obtain the accuracy information of the first model, or the number of inferences executed for obtaining the first accuracy information.

It should be noted that in this application, the number of inference executions can also be understood as: the number of inference outputs (number of inference output), or the number of analytics outputs (number of analytics output).

Optionally, the first number (the amount of the data used to obtain the accuracy of the first model) may also refer to the number of training executions, the number of inference executions, or the like. The number of inference executions may be numerically the same as the amount of the data groups, or may be the number of inferences executed by the model in the first communication device or the second communication device. When used to indicate the number of inferences executed by the model in the first communication device, the first number may be the number of inferences executed to calculate the model accuracy during a training stage (during the training process), or the number of inferences executed to calculate the model accuracy during a use stage (after the model has been issued to another communication device).

Optionally, in this embodiment of this application, the accuracy of the first model is represented by at least one of the following:

a ratio of the number of accurate predictions by the first model to a total number of predictions by the first model;
a mean absolute error of the first model;
a recall of the first model; and
an F1 score of the first model (an indicator used to measure model precision).

It should be noted that accuracy (or referred to as accuracy rate, Accuracy) refers to a percentage of the number of correct predictions by the model with respect to the total number of predictions. During the training stage, a validation dataset includes input data and labels (label data) which have a corresponding relationship, where one group of input data corresponds to one (group of) label(s). Whether this training is correct is determined by comparing a predicted value generated by the model with a label corresponding to this training. In one implementation, the first communication device divides the number of correct model inference results by a total number of inferences to obtain the accuracy of the first model, which is specifically: model accuracy = number of correct prediction results ÷ total number of predictions.

Precision (or referred to as accurate rate, precision rate, Precision) refers to a ratio of the number of correct predictions of a category by the model to the number of the category of prediction results by the model. To be specific, a proportion of samples correctly predicted as "A" among the samples inferred (predicted) as "A" can be used to indicate the precision of the inference by the model. For example, among the samples predicted as "A" by the model, how many are truly "A" samples, where "A" may be any category, such as a cell where a UE is located or a network load level.

Precision = number of samples predicted as "A" and truly being "A" ÷ number of samples predicted as "A".

The recall refers to a ratio of the number of correct predictions of a category by the model (or referred to as inference, that is, output data of the model) to the amount of data that is truly that category. To be specific, a proportion of data correctly predicted as "A" among the sample data that is truly "A" can be used to indicate whether an inference or prediction result by the model is complete, comprehensiveness of coverage, and the like. "A" may be any category, such as a cell where a UE is located or a network load level. Recall = number of samples predicted as "A" and truly being "A" ÷ number of samples truly being "A".

The F1 score is a comprehensive evaluation of precision and recall, and when the precision and recall are both high, the F1 score is also high. A specific formula is:

$$\frac{2}{F_1} = \frac{1}{P} + \frac{1}{R},$$

where
P represents the precision, and R represents the recall.

A mean absolute error (Mean Absolute Error, MAE) is calculated according to the following formula:

$$\text{MAE} = \frac{1}{m}\sum_{i=1}^{m} |y_m - y_m{}^{\wedge}|,$$

where
m represents an amount of input data inputted to the model, $y_m$ represents a true result, and $y_m{}^{\wedge}$ represents a predicted

result (that is, output data).

In this embodiment of this application, the first information further includes at least one of the following:

(1) model identifier information, where each model includes corresponding identity (Identity, ID) information used to uniquely identify the model;

(2) a first calculation method, used to indicate a method for calculating the accuracy of the first model, such as a ratio of the number of accurate predictions to a total number of predictions, a mean absolute error (Mean Absolute Error, MAE), a root mean square error (Root Mean Square Error, RMSE), a recall (Recall), a precision, or an F1 score (score);

(3) first accuracy information (model accuracy information), used to indicate the accuracy of the first model, or used to indicate an identifier or prediction accuracy that the first model can achieve after training; and

(4) first accuracy result distribution information, used to indicate a distribution of accuracy results of the first model, for example, a dimension of the accuracy results, such as a mean value of the accuracy of the first model, a median value of the accuracy of the first model, a variance value of the accuracy of the first model, where the accuracy result distribution information may be obtained based on accuracy results of multiple model evaluations executed during the training or inference process of the first model, or be obtained by receiving and aggregating model accuracies obtained from other communication devices.

It should be noted that the accuracy information of the first model may be obtained based on a prediction result of the first model. In one optional manner, the accuracy of the first model may be calculated by dividing the number of correct prediction results (that is, output results) of the first model by the total number of predictions, for example: accuracy = number of correct prediction results ÷ total number of predictions. Specifically, the second communication device may configure one validation dataset for evaluating the accuracy of the first model; the validation dataset includes input data for inputted into the first model and true label data; the input data is inputted into the trained first model to obtain output data; and comparison is performed to check whether the output data is consistent with the true label data, to determine whether this prediction result is correct, and then a value of the accuracy of the first model is obtained according to the above calculation formula. Additionally, for regression problems, to be specific, when an output value of the first model is not a category but a specific value, MAE may be used to calculate and represent performance and accuracy of the first model.

It should be noted that the calculation method may be related to the accuracy to some extent, for example, a value represented by the accuracy information is a calculation method corresponding to calculation method information.

It should be noted that content in the first information may be sent together or sent separately by the first communication device to the second communication device. For example, the information for indicating the data used to obtain the accuracy of the first model is sent first, the model identifier information and the first calculation method are sent subsequently, and then the first accuracy information is sent.

Optionally, the first information may further include at least one of the following:

(1) model address information, where the model address information is used to indicate an address for storing the first model, such as an Internet Protocol (Internet Protocol, IP) address or a fully qualified domain name (Fully Qualified Domain Name, FQDN), such that the second communication device can obtain a file of the first model from this address;

(2) data analysis task identifier information, where the data analysis task identifier information is used to indicate a type of a task for the first model, such that the second communication device can determine a type of a service to which the first model is applicable;

(3) first model filter information (model filter information), where the first model filter information is used to indicate a condition that the first model needs to meet, such as area of interest (Area of Interest, AOI), single network slice selection assistance information (Single Network Slice Selection Assistance Information, S-NSSAI), and data network name (Data Network Name, DNN) information;

(4) object information, where the object information is used to indicate the object for the first model, such as specific UE(s), or one or more groups of UEs;

(5) model size information, used to indicate a size of the first model, or a storage space required to store the first model or run the first model, thereby helping the second communication device to reserve sufficient storage space for storing and running the first model;

(6) inference time information of the first model, used to indicate a possible duration required to perform inference using the first model; and

(7) time information of training data of the first model, such as a time of the training data, for example, a time from three months ago to two months ago. The time of the training data may be a time when the training data is generated or a time when the training data is collected.

In this embodiment of this application, the method further includes:
sending, by the first communication device, the first model to the second communication device.

In this embodiment of this application, in a case that the first communication device sends the first information to the second communication device, a first model corresponding to the first information may also be sent to the second communication device. For example, in a possible scenario, in a case that the first communication device obtains a new model by training, it may actively send the new model (that is, the first model) to the second communication device, thereby enabling the second communication device to obtain the model in a timely manner. The second communication device may communicate with the first communication device through the model, thereby ensuring that service interactions between the second communication device and the first communication device can be achieved through an AI model.

Optionally, in a case that the first communication device determines to send the first model to the second communication device, the first communication device may calculate the accuracy of the first model during the training process of the first model. For the accuracy information of the first model, the first communication device may divide all training data into two groups, where one group is used to train the first model, and the other group is used to calculate the accuracy of the first model. For example, after the first model is trained and obtained using the first group of training data, the second group of training data is used to calculate the accuracy, to obtain the accuracy information of the first model. For example, the accuracy of the first model may be represented by a similarity between data outputted from input data inputted into the second group of training data by the first model and label data (label) or ground truth (ground truth) corresponding to the second group of training data. Alternatively, the accuracy of the first model may be represented by a root mean square error, a recall, or the like. It should be noted that a specific method for calculating the accuracy varies depending on a dimension of the accuracy (or meaning of the accuracy), which is not specifically limited in this embodiment.

In this embodiment of this application, the method further includes:
receiving, by the first communication device, a first request sent by the second communication device, where the first request is used to request acquisition of the first model.

Optionally, the second communication device may send the first request to the first communication device, to request the acquisition of the first model. For example, the second communication device may request acquisition of a specific model, a specific type of model, a model meeting a preset accuracy, a model meeting the requirements of the first communication device, or the like. Upon receiving the first request, the first communication device may determine the first model based on the first request, and send the first model to the second communication device, to respond to the first request sent by the second communication device.

In some optional implementations, upon receiving the first request, the first communication device, after determining the first model, further determines the information about the data used to obtain the accuracy of the first model to obtain the first information, and both the first model and the first information are sent to the second communication device, where the first model and the first information may be sent simultaneously or sent separately. Thus, upon obtaining the first model, the second communication device can further obtain information for describing the data used to obtain the accuracy of the first model, thereby enabling the second communication device to obtain, based on the information of the data, the accuracy of the first model based on the data information, which further helps the second communication device to better use the first model.

Optionally, the receiving, by the first communication device, a first request sent by the second communication device includes any one of the following:

receiving, by the first communication device, the first request directly sent by the second communication device; and
receiving, by the first communication device, the first request sent by the second communication device through a third communication device.

For example, the first communication device may receive the first request directly through a connection, signaling, service, or the like (for example, Nnwdaf_AnalyticsSubscription_Subscribe/notify, Nnwdaf_MLModelProvision_ Subscribe/notify, or Nnwdaf_MLModelInfo_Request) with the second communication device, or the first request may be forwarded through the third communication device, to be specific, the second communication device sends the first request to the third communication device, and the third communication device sends the first request to the first communication device. The third communication device is a communication device with forwarding capability. Optionally, there may be one or more third communication devices. For example, the second communication device sends the first request to one third communication device, and this third communication device forwards the first request to the first communication device through another third communication device.

Optionally, the first request includes at least one of the following:

second information, where the second information is used to indicate information required for calculating a model accuracy;

a second calculation method, used to indicate a method required for calculating the model accuracy, such as a ratio of the number of accurate predictions to a total number of predictions, a mean absolute error (MAE), an RMSE, a recall (Recall), and an F1 score;

second accuracy information, used to indicate required information about the model accuracy, or used to indicate an identifier or prediction accuracy that the model needs to achieve after training; the accuracy may refer to the accuracy of a correct prediction or a predicted error value, such as an MAE; the required information may be a specific value, for example, in a percentage form, such as required accuracy information: 70%, which means that the accuracy of the first model needs to be greater than or equal to 70%; and the accuracy information may also be a threshold, and in a case that the model accuracy exceeds this threshold (greater than or less than), the first communication device issues the first information, or the like;

second accuracy result distribution information, used to indicate a distribution of results of a required model accuracy, such as a mean value of the model accuracy, a median value of the model accuracy, and a variance value of the model accuracy; and

first indication information, where the first indication information is used to instruct the first communication device to feed back the first information.

For example, the first request includes second information, that is, including information required for calculating the model accuracy. To be specific, in a case that the second communication device requests acquisition of the first model from the first communication device, the information required for calculating the model accuracy may be sent to the first communication device, to notify that the first communication device can calculate the accuracy of the first model based on the required information.

Alternatively, the first request may further include a second calculation method, meaning that the second communication device may also send the method required for calculating the model accuracy to the first communication device, and the first communication device may calculate the accuracy of the first model based on the second calculation method. Certainly, during an actual process of calculating the accuracy of the first model, the first communication device may not use the second calculation method sent by the second communication device. For example, the first communication device may use another calculation method to calculate the accuracy of the first model. In this case, the first calculation method for the accuracy of the first model in the first information sent by the first communication device is different from the second calculation method.

Alternatively, the first request may further include second accuracy result distribution information to indicate a distribution of model accuracy results required by the first communication device, for example, a mean value of the accuracy of the first model, or the like. It should be noted that during an actual process of calculating the accuracy of the first model by the first communication device, accuracy result distribution information actually obtained by the first communication device may be different from accuracy result distribution information required by the second communication device, that is, the first accuracy result distribution information may be different from the second accuracy result distribution information.

In addition, the first request may further include first indication information to instruct the first communication device to feed back the first information, specifically indicating that the first communication device feeds back at least one of the following: information about the data used to obtain the accuracy of the first model, model identifier information, the first calculation method, the first accuracy information, the first accuracy result distribution information, and the like. For example, the first indication information is used to instruct the first communication device to feed back the information about the data used to obtain the accuracy of the first model, used to instruct the first communication device to feed back the method for calculating the accuracy of the first model, used to instruct the first communication device to feed back the accuracy of the first model, or the like, and no further examples are listed herein. Thus, upon sending the first model to the second communication device based on the first request, the first communication device may also feed back, based on the first indication information, information related to the accuracy of the first model to the second communication device.

Optionally, the first request may further include at least one of the following:

(1) data analysis task identifier information, where the data analysis task identifier information is used to indicate a type of a task for a required model;

(2) model filter information, where the model filter information is used to indicate a condition that the required model needs to meet, such as AOI, S-NSSAI, and DNN; and the model filter information can be used to assist the first communication device in model selection and model training, for example, data for training the first model needs to be located within these location ranges or slices;

(3) object information, where the object information is used to indicate an object for the required model, such as specific UE(s), or one or more groups of UEs;

(4) model size information, used to indicate a size of the required model or a storage space required to store the first model or run the first model;

(5) inference time information of the required model; and

(6) time information of training data of the required model.

It can be understood that the first request sent by the second communication device to the first communication device may include at least one of the above information, such that the second communication device can send the required information related to the first model to the first communication device, helping the first communication device to select or train, based on the information included in the first request, a first model that meets the requirements of the second communication device.

Optionally, the second information includes at least one of the following:

a second number, where the second number is used to indicate the amount of the data required for calculating the model accuracy;

a fourth number, where the fourth number is used to indicate the number of required inference executions;

a second collection time, where the second collection time is used to indicate a time for obtaining the data required for calculating the model accuracy;

a second collection area, where the second collection area is used to indicate an area for obtaining the data required for calculating the model accuracy;

second distribution information, where the second distribution information is used to indicate a distribution of the data required for calculating the model accuracy;

second source information, where the second source information is used to indicate a source of the data required for calculating the model accuracy; and

a second representative ratio, where the second representative ratio is used to represent a percentage of required objects applied in the training process of the first model.

It should be noted that the second information is used to indicate information required for calculating the model accuracy, meaning that the second communication device can send the information related to the data required for calculating the model accuracy to the first communication device, and the first communication device may calculate the accuracy of the first model based on the amount of the data, the distribution of the data, the source of the data, and the like corresponding to the information, or not based on the information.

It should be noted that the information related to "calculating the model accuracy", which is indicated in the second information, may be understood as information related to "performing model supervision", where "calculating the model accuracy" or "performing model supervision" can both refer to the network device obtaining data (such as actual data in a network), calculating the accuracy, and the like. In other words, in this application, terms such as "calculating the model accuracy" have the same meaning as "performing model supervision", and they are interchangeable. This is not described again hereinafter.

It should be noted that in this application, the inference and analytics (analytics) have the same meaning and are interchangeable. For example, inference execution and analytics execution have the same meaning, the number of inference executions and the number of analytics executions have the same meaning, inference output and analytics output have the same meaning, or the number of inference outputs and the number of analytics outputs have the same meaning, which are not described again hereinafter.

It should be noted that the second number (the amount of data required for calculating the model accuracy) or the fourth number (the number of required inference executions) may be a threshold. When the data used to obtain the accuracy information of the first model and/or the number of inference executions is greater than or equal to this threshold, a first device sends first information. For example, if the threshold is 1000, the first device sends the first information only when the amount of data used to obtain the first accuracy information of the first model and/or the number of inference executions is greater than or equal to 1000.

For example, the amount of data required for calculating the accuracy of the first model (the second number) is different from the amount of data actually used to calculate the accuracy of the first model. Alternatively, the time for obtaining the data required for calculating the model accuracy is different from the time for obtaining the data actually used to calculate the accuracy of the first model. Certainly, the second distribution information may also be different from the first distribution information, the second source information may also be different from the first source information, and the second representative ratio may also be different from the first representative ratio. This is not further described herein.

In this embodiment of this application, the method further includes:

receiving, by the first communication device, a second request sent by the second communication device, where the second request is used to request acquisition of a model accuracy corresponding to the first model. In some optional implementations, upon receiving the second request, the first communication device performs operations such as performing model accuracy calculation or model supervision, to obtain the accuracy of the first model.

Optionally, the receiving, by the first communication device, a second request sent by the second communication device includes any one of the following:

receiving, by the first communication device, the second request directly sent by the second communication device; and

receiving, by the first communication device, the second request sent by the second communication device through a third communication device.

For example, the first communication device may receive the second request directly through a connection, signaling, service, or the like (for example, Nnwdaf_MLModelProvision_Subscribe/notify or Nnwdaf_MLModelMonitor _Request) with the second communication device, or the second request may be forwarded through the third communication device, to be specific, the second communication device sends the second request to the third communication device, and the third communication device sends the second request to the first communication device. The third communication device is a communication device with forwarding capability. Optionally, there may be one or more third communication devices. For example, the second communication device sends the first request to one third communication device, and this third communication device forwards the first request to the first communication device through another third communication device.

Optionally, the second request includes at least one of the following:

being used to indicating information required for calculating the model accuracy;

being used to indicate information about a method required for calculating the model accuracy, such as a ratio of the number of accurate predictions to a total number of predictions, a mean absolute error MAE, an RMSE, a recall (Recall), and an F1 score;

being used to indicate required information about the model accuracy, or used to indicate an identifier or prediction accuracy that the model needs to achieve after training; where the accuracy may refer to the accuracy of a correct prediction or a predicted error value, such as an MAE; the required information may be a specific value, for example, in a percentage form, such as required accuracy information: 70%, which means that the accuracy of the first model needs to be greater than or equal to 70%; and the accuracy information may also be a threshold, and in a case that the model accuracy exceeds this threshold (greater than or less than), the first communication device issues the first information, or the like;

being used to indicate required information about a distribution of model accuracy results, such as a mean value of the model accuracy, a median value of the model accuracy, and a variance value of the model accuracy; and

being used to instruct the first communication device to feed back the first information.

Optionally, the second request may further include at least one of the following:

data analysis task identifier information, where the data analysis task identifier information is used to indicate a type of a task for a required model;

model filter information, where the model filter information is used to indicate a condition that the required model needs to meet, such as AOI, S-NSSAI, and DNN; and the model filter information can be used to assist the first communication device in model selection and model training, for example, data for training the first model needs to be located within these location ranges or slices;

object information, where the object information is used to indicate an object for the required model, such as specific UE(s), or one or more groups of UEs;

model identifier information or the like;

information used to indicate the amount of the data required for calculating the model accuracy;

information used to indicate a time for obtaining the data required for calculating the model accuracy;

information used to indicate a distribution of the data required for calculating the model accuracy;

information used to indicate a source of the data required for calculating the model accuracy; and

information used to represent a percentage of required objects applied in the training process of the first model.

In this embodiment of this application, after the receiving, by the first communication device, a first request sent by the second communication device, the method may further include any one of the following:

selecting, by the first communication device based on the first request, an existing model as the first model; and

training, by the first communication device based on the first request, a target model to obtain the first model.

For example, after the first communication device receives the first request, the first communication device stores a trained required model meeting the first request, and if the first communication device has received a similar request and generated a trained model, the first communication device may use the existing model meeting the first request as the first model, and send the first model to the second communication device.

Alternatively, after receiving the first request, the first communication device may train a new model as the first model. For example, the first communication device may determine the category of the to-be-collected data based on task information (such as data analysis task identifier information) in the first request, so as to determine a certain device category and send a data acquisition request to a device of that device category to request acquisition of related data. For example, if it is determined based on the task information that network element load data information needs to be collected, a data acquisition request is sent to a UPF network element to obtain related data. After obtaining the related data, the first communication device uses the data for model training to obtain a first model that meets the requirements, and sends the first model obtained after training to the second communication device.

It should be noted that meeting the requirements means that the information related to the model selected or trained by the first communication device matches the information in the first request. For example, the task for the first model is a type of task requested in the first request, the accuracy of the first model is greater than or equal to an accuracy corresponding to required model accuracy information in the first request, or the like.

In this embodiment of this application, the first communication device sends or trains, based on the first request sent by the second communication device, the first model meeting the first request, sends the first model to the second communication device, and sends the information for indicating the data used to obtain the accuracy of the first model to the second communication device. Thus, during a process of using the first model, the second communication device can obtain, based on the accuracy of the first model, an accuracy of an output result of the first model, such that the second communication device can better use the first model, improving the credibility and use experience of the first model.

The term "indicate" in the specification and claims of this application may refer to either an explicit indication or an implicit indication. The explicit indication may be understood as that a sender clearly informs a receiver of an operation to be performed or a result of a request in the sent indication; and the implicit indication may be understood as that the receiver makes a judgment based on the indication sent by the sender and determines, based on a judgment result, the operation to be performed or the result of the request.

Referring to FIG. 3, FIG. 3 is a flowchart of another information transmission method according to an embodiment of this application. As shown in FIG. 3, the method includes the following step.

Step 301: A second communication device receives first information sent by a first communication device, where the first information includes information for indicating data used to obtain an accuracy of a first model.

Optionally, the first information further includes at least one of the following:

model identifier information;
a first calculation method, where the first calculation method is used to indicate a method for calculating the accuracy of the first model;
first accuracy information, where the first accuracy information is used to indicate the accuracy of the first model; and
first accuracy result distribution information, where the first accuracy result distribution information is used to indicate a distribution of accuracy results of the first model.

Optionally, the information for indicating the data used to obtain the accuracy of the first model includes at least one of the following:

a first number, where the first number is used to indicate an amount of the data used to obtain the accuracy of the first model;
a third number, where the third number is used to indicate the number of inference executions;
a first collection time, where the first collection time is used to indicate a time for obtaining the data used to obtain the accuracy of the first model;
a first collection area, where the first collection area is used to indicate an area for obtaining the data used to obtain the accuracy of the first model;
first distribution information, where the first distribution information is used to indicate a distribution of the data used to obtain the accuracy of the first model;
first source information, where the first source information is used to indicate a source of the data used to obtain the accuracy of the first model; and
a first representative ratio, where the first representative ratio is used to represent a percentage of objects applied in a training process of the first model.

Optionally, the method further includes:
receiving, by the second communication device, the first model sent by the first communication device.

Optionally, the method further includes:

sending, by the second communication device, a first request to the first communication device, where the first request is used to request acquisition of the first model.

Optionally, the sending, by the second communication device, a first request to the first communication device includes:

receiving, by the second communication device, a first request sent by a third communication device, and sending the first request to the first communication device.

Optionally, the first request includes at least one of the following:

second information, where the second information is used to indicate information required for calculating a model accuracy;

a second calculation method, where the second calculation method is used to indicate a method required for calculating the model accuracy;

second accuracy information, where the second accuracy information is used to indicate information about a required model accuracy;

second accuracy result distribution information, where the second accuracy result distribution information is used to indicate a distribution of results of the required model accuracy; and

first indication information, where the first indication information is used to instruct the first communication device to feed back the first information.

Optionally, the second information includes at least one of the following:

a second number, where the second number is used to indicate the amount of the data required for calculating the model accuracy;

a fourth number, where the fourth number is used to indicate the number of required inference executions;

a second collection time, where the second collection time is used to indicate a time for obtaining the data required for calculating the model accuracy;

a second collection area, where the second collection area is used to indicate an area for obtaining the data required for calculating the model accuracy;

second distribution information, where the second distribution information is used to indicate a distribution of the data required for calculating the model accuracy;

second source information, where the second source information is used to indicate a source of the data required for calculating the model accuracy; and

a second representative ratio, where the second representative ratio is used to represent a percentage of required objects applied in a model training process.

Optionally, the accuracy of the first model is represented by at least one of the following:

a ratio of the number of accurate predictions by the first model to a total number of predictions by the first model;

a mean absolute error of the first model;

a recall of the first model; and

an F1 score of the first model.

It should be noted that the information transmission method provided in this embodiment of this application is applied in the second communication device and corresponds to the method applied in the first communication device side described in FIG. 2. Related definitions and specific implementation processes involved in this embodiment of this application may refer to the description in the method embodiment described in FIG. 2. To avoid repetition, details are not described again in this embodiment.

In this embodiment of this application, the second communication device receives the first information sent by the first communication device, and the first information includes the information for indicating the data used to obtain the accuracy of the first model, thereby enabling the second communication device to obtain, based on the information of the data, the accuracy of the first model. Thus, the second communication device can better use the first model, improving the credibility and use experience of the first model.

The information transmission method provided in this embodiment of this application may be executed by an information transmission apparatus. In this embodiment of this application, an information transmission method being executed by an information transmission apparatus is used as an example for describing the information transmission apparatus provided in the embodiments of this application.

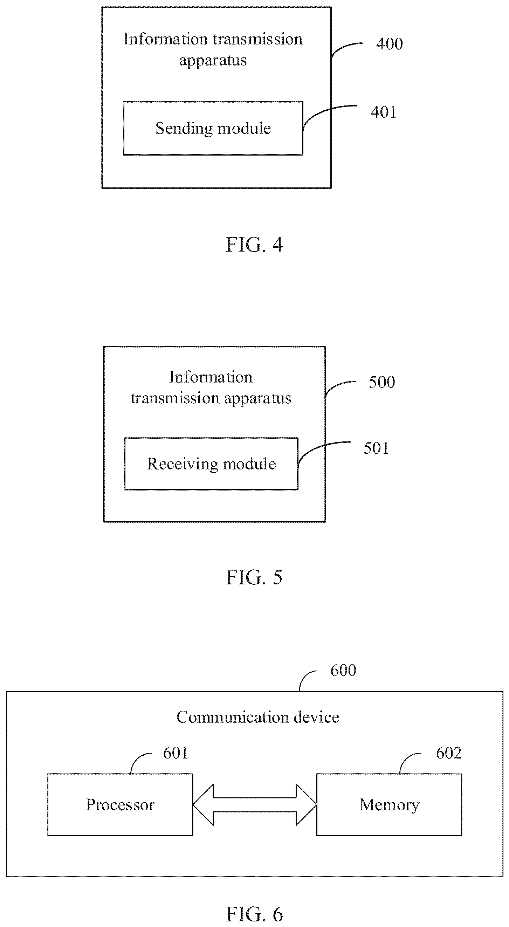

Referring to FIG. 4, FIG. 4 is a structural diagram of an information transmission apparatus according to an embodiment of this application. As shown in FIG. 4, the information transmission apparatus 400 includes:

a sending module 401, configured to send first information to a second communication device; where the first information includes information for indicating data used to obtain an accuracy of a first model.

Optionally, the first information further includes at least one of the following:

model identifier information;
a first calculation method, where the first calculation method is used to indicate a method for calculating the accuracy of the first model;
first accuracy information, where the first accuracy information is used to indicate the accuracy of the first model; and
first accuracy result distribution information, where the first accuracy result distribution information is used to indicate a distribution of accuracy results of the first model.

Optionally, the information for indicating the data used to obtain the accuracy of the first model includes at least one of the following:

a first number, where the first number is used to indicate an amount of the data used to obtain the accuracy of the first model;
a third number, where the third number is used to indicate the number of inference executions;
a first collection time, where the first collection time is used to indicate a time for obtaining the data used to obtain the accuracy of the first model;
a first collection area, where the first collection area is used to indicate an area for obtaining the data used to obtain the accuracy of the first model;
first distribution information, where the first distribution information is used to indicate a distribution of the data used to obtain the accuracy of the first model;
first source information, where the first source information is used to indicate a source of the data used to obtain the accuracy of the first model; and
a first representative ratio, where the first representative ratio is used to represent a percentage of objects applied in a training process of the first model.

Optionally, the sending module 401 is further configured to:
send the first model to the second communication device.
Optionally, the apparatus further includes:
a receiving module, configured to receive a first request sent by the second communication device, where the first request is used to request acquisition of the first model.
Optionally, the receiving module is configured to:
receive the first request sent by the second communication device through a third communication device.
Optionally, the first request includes at least one of the following:

second information, where the second information is used to indicate information required for calculating a model accuracy;
a second calculation method, where the second calculation method is used to indicate a method required for calculating the model accuracy;
second accuracy information, where the second accuracy information is used to indicate information about a required model accuracy;
second accuracy result distribution information, where the second accuracy result distribution information is used to indicate a distribution of results of the required model accuracy; and
first indication information, where the first indication information is used to instruct the first communication device to feed back the first information.

Optionally, the second information includes at least one of the following:

a second number, where the second number is used to indicate the amount of the data required for calculating the model accuracy;
a fourth number, where the fourth number is used to indicate the number of required inference executions;
a second collection time, where the second collection time is used to indicate a time for obtaining the data required for calculating the model accuracy;
a second collection area, where the second collection area is used to indicate an area for obtaining the data required for calculating the model accuracy;

second distribution information, where the second distribution information is used to indicate a distribution of the data required for calculating the model accuracy;

second source information, where the second source information is used to indicate a source of the data required for calculating the model accuracy; and

a second representative ratio, where the second representative ratio is used to represent a percentage of required objects applied in a model training process.

Optionally, the accuracy of the first model is represented by at least one of the following:

a ratio of the number of accurate predictions by the first model to a total number of predictions by the first model;
a mean absolute error of the first model;
a recall of the first model; and
an F1 score of the first model.

Optionally, the apparatus further includes an executing module configured to execute any one of the following:

selecting, based on the first request, an existing model as the first model; and

training, based on the first request, a target model to obtain the first model.

In this embodiment of this application, the apparatus sends the first information to the second communication device, and the first information includes the information for indicating the data used to obtain the accuracy of the first model, thereby enabling the second communication device to obtain, based on the information of the data, the accuracy of the first model. Thus, the second communication device can better use the first model, improving the credibility and use experience of the first model.

The information transmission apparatus 400 in this embodiment of this application may be an electronic device such as an electronic device having an operating system, or may be a component such as an integrated circuit or a chip in an electronic device. The electronic device may be a terminal or another device other than a terminal. For example, the terminal may include, but is not limited to, the types of the terminal 11 listed above, and another device may be a server, a network attached storage (Network Attached Storage, NAS) or the like. This is not specifically limited in this embodiment of this application.

The information transmission apparatus 400 provided in this embodiment of this application can implement the processes implemented by the first communication device in the method embodiment in FIG. 2, with the same technical effects achieved. To avoid repetition, details are not described herein again.

Referring to FIG. 5, FIG. 5 is a structural diagram of another information transmission apparatus according to an embodiment of this application. As shown in FIG. 5, the information transmission apparatus 500 includes:

a receiving module 501, configured to receive first information sent by a first communication device; where the first information includes information for indicating data used to obtain an accuracy of a first model.

Optionally, the first information further includes at least one of the following:

model identifier information;
a first calculation method, where the first calculation method is used to indicate a method for calculating the accuracy of the first model;
first accuracy information, where the first accuracy information is used to indicate the accuracy of the first model; and
first accuracy result distribution information, where the first accuracy result distribution information is used to indicate a distribution of accuracy results of the first model.

Optionally, the information for indicating the data used to obtain the accuracy of the first model includes at least one of the following:

a first number, where the first number is used to indicate an amount of the data used to obtain the accuracy of the first model;
a third number, where the third number is used to indicate the number of inference executions;
a first collection time, where the first collection time is used to indicate a time for obtaining the data used to obtain the accuracy of the first model;
a first collection area, where the first collection area is used to indicate an area for obtaining the data used to obtain the accuracy of the first model;

first distribution information, where the first distribution information is used to indicate a distribution of the data used to obtain the accuracy of the first model;

first source information, where the first source information is used to indicate a source of the data used to obtain the accuracy of the first model; and

a first representative ratio, where the first representative ratio is used to represent a percentage of objects applied in a training process of the first model.

Optionally, the receiving module 501 is further configured to:

receive the first model sent by the first communication device.

Optionally, the apparatus further includes:

a sending module, configured to send a first request to the first communication device, where the first request is used to request acquisition of the first model.

Optionally, the sending module is configured to execute any one of the following:

receiving a first request sent by a third communication device, and sending the first request to the first communication device.

Optionally, the first request includes at least one of the following:

second information, where the second information is used to indicate information required for calculating a model accuracy;

a second calculation method, where the second calculation method is used to indicate a method required for calculating the model accuracy;

second accuracy information, where the second accuracy information is used to indicate information about a required model accuracy;

second accuracy result distribution information, where the second accuracy result distribution information is used to indicate a distribution of results of the required model accuracy; and

first indication information, where the first indication information is used to instruct the first communication device to feed back the first information.

Optionally, the second information includes at least one of the following:

a second number, where the second number is used to indicate the amount of the data required for calculating the model accuracy;

a fourth number, where the fourth number is used to indicate the number of required inference executions;

a second collection time, where the second collection time is used to indicate a time for obtaining the data required for calculating the model accuracy;

a second collection area, where the second collection area is used to indicate an area for obtaining the data required for calculating the model accuracy;

second distribution information, where the second distribution information is used to indicate a distribution of the data required for calculating the model accuracy;

second source information, where the second source information is used to indicate a source of the data required for calculating the model accuracy; and

a second representative ratio, where the second representative ratio is used to represent a percentage of required objects applied in a model training process.

Optionally, the accuracy of the first model is represented by at least one of the following:

a ratio of the number of accurate predictions by the first model to a total number of predictions by the first model;

a mean absolute error of the first model;

a recall of the first model; and

an F1 score of the first model.

In this embodiment of this application, the apparatus receives the first information sent by the first communication device, and the first information includes the information for indicating the data used to obtain the accuracy of the first model, thereby enabling the apparatus to obtain, based on the information of the data, the accuracy of the first model. Thus, the apparatus can better use the first model, improving the credibility and use experience of the first model.

The information transmission apparatus 500 provided in this embodiment of this application can implement the processes implemented by the second communication device in the method embodiment in FIG. 3, with the same technical effects achieved. To avoid repetition, details are not described herein again.

Optionally, as shown in FIG. 6, an embodiment of this application further provides a communication device 600, including a processor 601 and a memory 602. The memory 602 stores a program or instructions capable of running on the processor 601. For example, in a case that the communication device 600 is a first communication device, when the program or instructions are executed by the processor 601, the processes of the foregoing information transmission method embodiments are implemented, with the same technical effects achieved. In a case that the communication device 600 is a second communication device, when the program or instructions are executed by the processor 601, the processes of the foregoing information transmission method embodiments are implemented, with the same technical effects achieved. To avoid repetition, details are not described herein again.

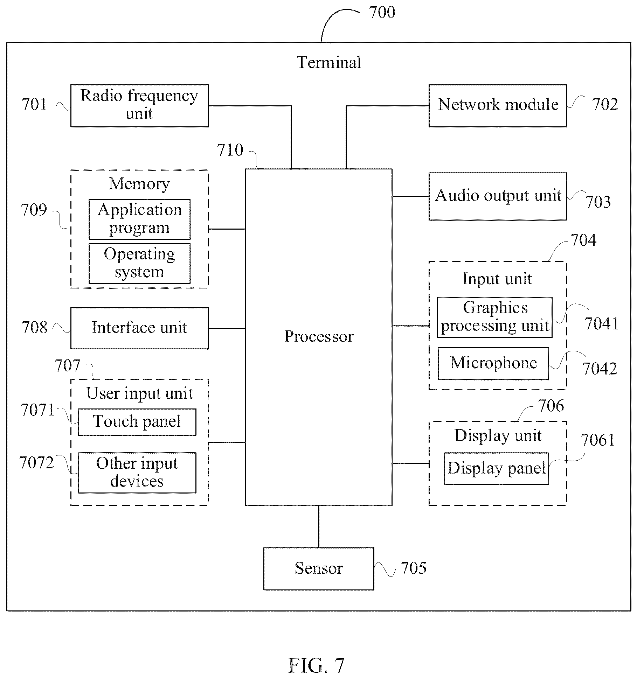

An embodiment of this application further provides a terminal, including a processor and a communication interface. The communication interface is configured to send first information to a second communication device or receive first information sent by a first communication device, where the first information includes information for indicating data used to obtain an accuracy of a first model. This terminal embodiment corresponds to the foregoing method embodiments on the first communication device side or second communication device side. All implementation processes and implementation manners in the foregoing method embodiments may be applicable to this terminal embodiment, with the same technical effects achieved. Specifically, FIG. 7 is a schematic diagram of a hardware structure of a terminal for implementing an embodiment of this application.

The terminal 700 includes, but is not limited to, at least some of components such as a radio frequency unit 701, a network module 702, an audio output unit 703, an input unit 704, a sensor 705, a display unit 706, a user input unit 707, an interface unit 708, a memory 709, and a processor 710.

It can be understood by persons skilled in the art that the terminal 700 may further include a power supply (for example, a battery) supplying power to the components. The power supply may be logically connected to the processor 710 through a power management system, such that functions such as charge management, discharge management, and power consumption management are implemented using the power management system. The structure of the terminal shown in FIG. 7 does not constitute any limitation on the terminal, and the terminal may include more or fewer components than shown in the figure, or combine some of the components, or have different arrangements of the components. Details are not described herein again.

It should be understood that in this embodiment of this application, the input unit 704 may include a graphics processing unit (Graphics Processing Unit, GPU) 7041 and a microphone 7042. The graphics processing unit 7041 processes image data of a static picture or video obtained by an image capture apparatus (for example, a camera) in a video capture mode or an image capture mode. The display unit 706 may include a display panel 7061, and the display panel 7061 may be configured in a form of a liquid crystal display, an organic light-emitting diode, and the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include, but are not limited to, a physical keyboard, a function button (for example, a volume control button or a power on/off button), a trackball, a mouse, and a joystick. Details are not described herein again.

In this embodiment of this application, the radio frequency unit 701 receives downlink data from a network-side device, and then sends the downlink data to the processor 710 for processing. In addition, the radio frequency unit 701 may send uplink data to the network-side device. Typically, the radio frequency unit 701 includes, but is not limited to, an antenna, an amplifier, a transceiver, a coupler, a low noise amplifier, and a duplexer.

The memory 709 may be configured to store a software program or instructions and various data. The memory 709 may mainly include a first storage area for storing a program or instructions and a second storage area for storing data. The first storage area may store an operating system, an application program or instructions required by at least one function (for example, a sound play function or an image play function), and the like. In addition, the memory 709 may be a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes, but is not limited to, these or any other applicable types of memories.

The processor 710 may include one or more processing units. Optionally, the processor 710 may integrate an application processor and a modem processor. The application processor primarily processes operations involving an operating system, a user interface, an application program, and the like. The modem processor primarily processes radio communication signals, for example, being a baseband processor. It can be understood that the modem processor may alternatively be not integrated in the processor 710.

In one implementation, the terminal 700 in this embodiment of this application can serve as a first communication device to implement the processes of the foregoing information transmission method, where the radio frequency unit 701 is configured to send first information to a second communication device, and the first information includes information for indicating data used to obtain an accuracy of a first model.

In another implementation, the terminal 700 in this embodiment of this application can serve as a second communication device to implement the processes of the foregoing information transmission method, where the radio frequency unit 701 is configured to receive first information sent by a first communication device, and the first information includes information for indicating data used to obtain an accuracy of a first model.

In this embodiment of this application, the terminal sends or receives the first information, and the first information includes the information for indicating the data used to obtain the accuracy of the first model, so that the accuracy of the first model can be obtained based on the information of the data. Thus, the terminal or an opposite terminal can better use the first model, improving the credibility and use experience of the first model.

An embodiment of this application further provides a network-side device, including a processor and a communication interface. This network-side device embodiment corresponds to the foregoing method embodiments on the first communication device side or second communication device side. All implementation processes and implementation manners in the foregoing method embodiments are applicable to this network-side device embodiment, with the same technical effects achieved.

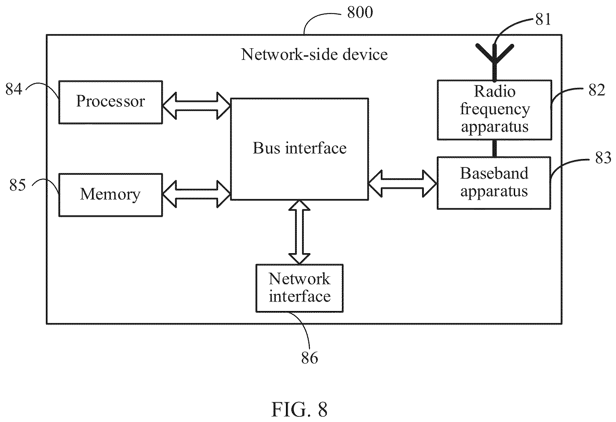

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out through the antenna 81.

The method performed by the network-side device in the foregoing embodiment may be implemented in the baseband apparatus 83, and the baseband apparatus 83 includes a baseband processor.

The baseband apparatus 83 may include, for example, at least one baseband board, where a plurality of chips are disposed on the baseband board. As shown in FIG. 8, one of the chips is, for example, a baseband processor which is connected to the memory 85 through a bus interface, to invoke a program in the memory 85 to perform the operation of the network device shown in the foregoing method embodiment.

The network-side device may further include a network interface 86, where the network interface is, for example, a common public radio interface (common public radio interface, CPRI).

Specifically, the network-side device 800 in this embodiment of this application further includes: instructions or a program stored in the memory 85 and capable of running on the processor 84. The processor 84 invokes the instructions or program in the memory 85 to perform the method executed by the modules shown in FIG. 4 or FIG. 5, with the same technical effects achieved. To avoid repetition, details are not described herein again.

An embodiment of this application further provides a readable storage medium, where the readable storage medium stores a program or instructions, and when the program or instructions are executed by a processor, the processes of the method embodiment as described in FIG. 2 are implemented, or the processes of the method embodiment as described in FIG. 3 are implemented, with the same technical effects achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc.

An embodiment of this application further provides a chip. The chip includes a processor and a communication interface, where the communication interface is coupled to the processor, and the processor is configured to run a program or instructions to implement the processes of the method embodiment as described in FIG. 2 or to implement the processes of the method embodiment as described in FIG. 3, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the computer program product is stored in a storage medium, and the computer program product is executed by at least one processor to implement the processes of the method embodiment as described in FIG. 2 or to implement the processes of the method embodiment as described in FIG. 3, with the same technical effects achieved. To avoid repetition, details are not described herein again.

An embodiment of this application further provides a communication system, including a first communication device and a second communication device. The first communication device may be configured to implement the steps of the method as described in FIG. 2, and the second communication device may be configured to implement the steps of the method as described in FIG. 3.

It should be noted that in this specification, the terms "include", "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and various steps may be added, omitted, or combined. In addition, features described with reference to some examples may be combined in other examples.

Based on the description of the foregoing implementations, persons skilled in the art may clearly understand that the method in the foregoing embodiments can be implemented through software on a necessary hardware platform or certainly through hardware only, but in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from the principle of this application and the protection scope of the claims, and all these manners fall within the protection scope of this application.

**Claims**

1. An information transmission method, comprising:

    sending, by a first communication device, first information to a second communication device; wherein
    the first information comprises information for indicating data used to obtain an accuracy of a first model.

2. The method according to claim 1, wherein the first information further comprises at least one of the following:

    model identifier information;
    a first calculation method, wherein the first calculation method is used to indicate a method for calculating the accuracy of the first model;
    first accuracy information, wherein the first accuracy information is used to indicate the accuracy of the first model; and
    first accuracy result distribution information, wherein the first accuracy result distribution information is used to indicate a distribution of accuracy results of the first model.

3. The method according to claim 1, wherein the information for indicating the data used to obtain the accuracy of the first model comprises at least one of the following:

    a first number, wherein the first number is used to indicate an amount of the data used to obtain the accuracy of the first model;
    a third number, wherein the third number is used to indicate the number of inference executions;
    a first collection time, wherein the first collection time is used to indicate a time for obtaining the data used to obtain the accuracy of the first model;
    a first collection area, wherein the first collection area is used to indicate an area for obtaining the data used to obtain the accuracy of the first model;

first distribution information, wherein the first distribution information is used to indicate a distribution of the data used to obtain the accuracy of the first model;

first source information, wherein the first source information is used to indicate a source of the data used to obtain the accuracy of the first model; and

a first representative ratio, wherein the first representative ratio is used to represent a percentage of objects applied in a training process of the first model.

4. The method according to claim 1 or 2, wherein the method further comprises:
sending, by the first communication device, the first model to the second communication device.

5. The method according to claim 4, wherein the method further comprises:
receiving, by the first communication device, a first request sent by the second communication device, wherein the first request is used to request acquisition of the first model.

6. The method according to claim 5, wherein the receiving, by the first communication device, a first request sent by the second communication device comprises:
receiving, by the first communication device, the first request sent by the second communication device through a third communication device.

7. The method according to claim 5, wherein the first request comprises at least one of the following:

second information, wherein the second information is used to indicate information required for calculating a model accuracy;

a second calculation method, wherein the second calculation method is used to indicate a method required for calculating the model accuracy;

second accuracy information, wherein the second accuracy information is used to indicate information about a required model accuracy;

second accuracy result distribution information, wherein the second accuracy result distribution information is used to indicate a distribution of results of the required model accuracy; and

first indication information, wherein the first indication information is used to instruct the first communication device to feed back the first information.

8. The method according to claim 7, wherein the second information comprises at least one of the following:

a second number, wherein the second number is used to indicate an amount of data required for calculating the model accuracy;

a fourth number, wherein the fourth number is used to indicate the number of required inference executions;

a second collection time, wherein the second collection time is used to indicate a time for obtaining the data required for calculating the model accuracy;

a second collection area, wherein the second collection area is used to indicate an area for obtaining the data required for calculating the model accuracy;

second distribution information, wherein the second distribution information is used to indicate a distribution of the data required for calculating the model accuracy;

second source information, wherein the second source information is used to indicate a source of the data required for calculating the model accuracy; and

a second representative ratio, wherein the second representative ratio is used to represent a percentage of required objects applied in a model training process.

9. The method according to claim 1, wherein the accuracy of the first model is represented by at least one of the following:

a ratio of the number of accurate predictions by the first model to a total number of predictions by the first model;

a mean absolute error of the first model;

a recall of the first model;

an accuracy of the first model; and

an F1 score of the first model.

10. The method according to claim 5, wherein the method further comprises any one of the following:

selecting, by the first communication device based on the first request, an existing model as the first model; and training, by the first communication device based on the first request, a target model to obtain the first model.

11. The method according to claim 1 or 2, wherein the method further comprises:
receiving, by the first communication device, a second request sent by the second communication device, wherein the second request is used to request acquisition of a model accuracy corresponding to the first model.

12. The method according to claim 11, wherein the receiving, by the first communication device, a second request sent by the second communication device comprises:
receiving, by the first communication device, the second request sent by the second communication device through a third communication device.

13. An information transmission method, comprising:
receiving, by a second communication device, first information sent by a first communication device; wherein the first information comprises information for indicating data used to obtain an accuracy of a first model.

14. The method according to claim 13, wherein the first information further comprises at least one of the following:
model identifier information;
a first calculation method, wherein the first calculation method is used to indicate a method for calculating the accuracy of the first model;
first accuracy information, wherein the first accuracy information is used to indicate the accuracy of the first model; and
first accuracy result distribution information, wherein the first accuracy result distribution information is used to indicate a distribution of accuracy results of the first model.

15. The method according to claim 13, wherein the information for indicating the data used to obtain the accuracy of the first model comprises at least one of the following:

a first number, wherein the first number is used to indicate the amount of the data used to obtain the accuracy of the first model;
a third number, wherein the third number is used to indicate the number of inference executions;
a first collection time, wherein the first collection time is used to indicate a time for obtaining the data used to obtain the accuracy of the first model;
a first collection area, wherein the first collection area is used to indicate an area for obtaining the data used to obtain the accuracy of the first model;
first distribution information, wherein the first distribution information is used to indicate a distribution of the data used to obtain the accuracy of the first model;
first source information, wherein the first source information is used to indicate a source of the data used to obtain the accuracy of the first model; and
a first representative ratio, wherein the first representative ratio is used to represent a percentage of objects applied in a training process of the first model.

16. The method according to claim 13 or 14, wherein the method further comprises:
receiving, by the second communication device, the first model sent by the first communication device.

17. The method according to claim 16, wherein the method further comprises:
sending, by the second communication device, a first request to the first communication device, wherein the first request is used to request acquisition of the first model.

18. The method according to claim 17, wherein the sending, by the second communication device, a first request to the first communication device comprises any one of the following:
receiving, by the second communication device, a first request sent by a third communication device, and sending the first request to the first communication device.

19. The method according to claim 17, wherein the first request comprises at least one of the following:

second information, wherein the second information is used to indicate information required for calculating a model accuracy;

a second calculation method, wherein the second calculation method is used to indicate a method required for calculating the model accuracy;

second accuracy information, wherein the second accuracy information is used to indicate information about a required model accuracy;

second accuracy result distribution information, wherein the second accuracy result distribution information is used to indicate a distribution of results of the required model accuracy; and

first indication information, wherein the first indication information is used to instruct the first communication device to feed back the first information.

20. The method according to claim 19, wherein the second information comprises at least one of the following:

a second number, wherein the second number is used to indicate an amount of data required for calculating the model accuracy;

a fourth number, wherein the fourth number is used to indicate the number of required inference executions;

a second collection time, wherein the second collection time is used to indicate a time for obtaining the data required for calculating the model accuracy;

a second collection area, wherein the second collection area is used to indicate an area for obtaining the data required for calculating the model accuracy;

second distribution information, wherein the second distribution information is used to indicate a distribution of the data required for calculating the model accuracy;

second source information, wherein the second source information is used to indicate a source of the data required for calculating the model accuracy; and

a second representative ratio, wherein the second representative ratio is used to represent a percentage of required objects applied in a model training process.

21. The method according to claim 13, wherein the accuracy of the first model is represented by at least one of the following:

a ratio of the number of accurate predictions by the first model to a total number of predictions by the first model;

a mean absolute error of the first model;

a recall of the first model; and

an F1 score of the first model.

22. An information transmission apparatus, comprising:

a sending module, configured to send first information to a second communication device; wherein the first information comprises information for indicating data used to obtain an accuracy of a first model.

23. An information transmission apparatus, comprising:

a receiving module, configured to receive first information sent by a first communication device; wherein the first information comprises information for indicating data used to obtain an accuracy of a first model.

24. A communication device, comprising a processor and a memory, wherein the memory stores a program or instructions capable of running on the processor, and when the program or instructions are executed by the processor, the steps of the information transmission method according to any one of claims 1 to 12 are implemented, or the steps of the information transmission method according to any one of claims 13 to 21 are implemented.

25. A readable storage medium, wherein the readable storage medium has a program or instructions stored thereon, and when the program or instructions are executed by a processor, the steps of the information transmission method according to any one of claims 1 to 12 are implemented, or the steps of the information transmission method according to any one of claims 13 to 21 are implemented.

Network-side
device

11

11

Terminal

Terminal

FIG. 1

A first communication device sends first information to a second
communication device, where the first information includes information
for indicating data used to obtain an accuracy of a first model

201

FIG. 2

A second communication device receives first information
sent by a first communication device, where the first
information includes information for indicating data used to
obtain an accuracy of a first model

301

FIG. 3

Information transmission apparatus — 400

Sending module — 401

FIG. 4

Information transmission apparatus — 500

Receiving module — 501

FIG. 5

— 600

Communication device

Processor — 601    Memory — 602

FIG. 6

700

Terminal

701 — Radio frequency unit

Network module — 702

710

Memory

709 — Application program

Operating system

Audio output unit — 703

704

Input unit

Graphics processing unit — 7041

Microphone — 7042

708 — Interface unit

Processor

707 — User input unit

7071 — Touch panel

7072 — Other input devices

706

Display unit — 7061

Display panel

Sensor — 705

FIG. 7

FIG. 8

## INTERNATIONAL SEARCH REPORT

| International application No. |
| --- |
| **PCT/CN2024/072225** |

**A.   CLASSIFICATION OF SUBJECT MATTER**

H04W 8/24(2009.01)i

According to International Patent Classification (IPC) or to both national classification and IPC

**B.   FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, DWPI, VEN, CNABS, ENTXTC: 人工智能, AI, 模型, 准确度, 准确率, 精准度, 精准率, 精度, 计算, 标识, 数量, 次数, model, accuracy, precision, ID, calculate

**C.   DOCUMENTS CONSIDERED TO BE RELEVANT**

| Category* | Citation of document, with indication, where appropriate, of the relevant passages | Relevant to claim No. |
| --- | --- | --- |
| X | CN 112039934 A (DATANG MOBILE COMMUNICATIONS EQUIPMENT CO., LTD.) 04 December 2020 (2020-12-04)<br>description, paragraphs 101-144 | 1-2, 4-6, 9-14, 16-18, 21-25 |
| A | CN 112039934 A (DATANG MOBILE COMMUNICATIONS EQUIPMENT CO., LTD.) 04 December 2020 (2020-12-04)<br>description, paragraphs 101-144 | 3, 7-8, 15, 19-20, 24-25 |
| A | CN 113837383 A (CHINA UNITED NETWORK COMMUNICATIONS GROUP CO., LTD.) 24 December 2021 (2021-12-24)<br>entire document | 1-25 |
| A | CN 114912582 A (BEIJING BAIDU NETCOM SCIENCE AND TECHNOLOGY CO., LTD.) 16 August 2022 (2022-08-16)<br>entire document | 1-25 |
| A | US 2021082408 A1 (INTERNATIONAL BUSINESS MACHINES CORP.) 18 March 2021 (2021-03-18)<br>entire document | 1-25 |

☐ Further documents are listed in the continuation of Box C.　　☑ See patent family annex.

| | |
| --- | --- |
| \*　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
| --- | --- |
| **26 March 2024** | **02 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/072225**

| Patent document cited in search report | | | Publication date (day/month/year) | Patent family member(s) | | | Publication date (day/month/year) |
|---|---|---|---|---|---|---|---|
| CN | 112039934 | A | 04 December 2020 | None | | | |
| CN | 113837383 | A | 24 December 2021 | None | | | |
| CN | 114912582 | A | 16 August 2022 | None | | | |
| US | 2021082408 | A1 | 18 March 2021 | JP | 2022547685 | A | 15 November 2022 |
| | | | | GB | 2604752 | A | 14 September 2022 |
| | | | | WO | 2021048727 | A1 | 18 March 2021 |
| | | | | US | 2022328041 | A1 | 13 October 2022 |
| | | | | DE | 112020003698 | T5 | 28 April 2022 |
| | | | | CN | 114207706 | A | 18 March 2022 |
| | | | | JP | 2022547685 | W | 15 November 2022 |

Form PCT/ISA/210 (patent family annex) (July 2022)

**REFERENCES CITED IN THE DESCRIPTION**

**Patent documents cited in the description**

- CN 202310057714
- CN 202310091135